# EUROPÄISCHE PATENTSCHRIFT

(11) **EP 3 639 670 B1**
(45) Veröffentlichungstag und Bekanntmachung des Hinweises auf die Patenterteilung: **22.09.2021**
(21) Anmeldenummer: 18201515.6
(22) Anmeldetag: 19.10.2018
(51) Int. Cl.: A22C 25/12

(54) **VORRICHTUNG UND VERFAHREN ZUR BAUCH-RÜCKENLAGEN-AUSRICHTUNG VON FISCHEN**
APPARATUS AND METHOD FOR ALIGNING THE ABDOMEN AND BACK OF A FISH
DISPOSITIF ET PROCÉDÉ D'ORIENTATION DU DOS ET DU VENTRE DES POISSONS

(43) Veröffentlichungstag der Anmeldung: 22.04.2020
(73) Patentinhaber: Nordischer Maschinenbau Rud. Baader GmbH + Co. KG, 23560 Lübeck (DE)
(72) Erfinder: Krepinsky, Gunnar, 23558 Lübeck (DE); Holtz, Jörg, 23564 Lübeck (DE)
(74) Vertreter: Stork Bamberger Patentanwälte PartmbB

(56) Entgegenhaltungen:
- EP-A2- 0 384 956
- DE-A1- 1 654 871
- DE-A1- 2 102 590
- JP-A- S53 138 898
- US-A- 4 270 650

## Beschreibung

Die vorliegende Erfindung betrifft eine Vorrichtung zur Bauch-Rückenlagen-Ausrichtung von Fischen. Des Weiteren betrifft die Erfindung ein Verfahren zur Bauch-Rückenlagen-Ausrichtung von Fischen.

Derartige Vorrichtungen und Verfahren kommen bei der automatischen Verarbeitung von Fischen zum Einsatz. Für die weiteren Bearbeitungsschritte während der Verarbeitung ist es erforderlich, die Fische bezüglich ihrer Bauch-Rückenlage einheitlich auszurichten. Aufgrund ihrer Körpergeometrie liegen die Fische in der Regel auf der Seite, jedoch bezüglich der Bauch- und Rückenseite ungeordnet. Um die Fische an nachfolgenden Bearbeitungsstationen be- oder verarbeiten zu können, ist es erforderlich, dass diese in einer vorgegebenen Ausrichtung bezüglich ihrer Bauch-Rückenlage einheitlich ausgerichtet sind.

Aus dem Stand der Technik sind zahlreiche verschiedene Lösungen zur Ausrichtung der Bauch-Rückenlage bekannt. Einige Lösungsansätze basieren auf dem Einsatz optischer Sensorik in Verbindung mit pneumatischer Aktorik, um zunächst die Lage der Fische zu ermitteln und, sofern die Fische hinsichtlich der Bauch-Rücken-Ausrichtung nicht bereits die korrekte Lage haben, diese sich in Fehlstellung befindenden Fische durch gesteuertes Eingreifen pneumatischer Aktoren zu wenden und in die gewünschte Bauch-Rücken-Ausrichtung zu bringen. Derartige Systeme zur Ausrichtung sind in der Regel aufwändig und kostenintensiv. Verschmutzungen der optischen Sensoren führen häufig zu Störung und/oder machen einen erhöhten Reinigungsbedarf erforderlich.

Beispielsweise geht aus dem Dokument EP 0 384 956 A2 eine Fischbearbeitungsmaschine hervor, die eine Fischzuführung, einen Köpfeinrichtung, eine Bauchfiletier- und Eingeweide-Entfernungseinrichtung sowie eine Entfernungseinrichtung für dunkel farbiges Fleisch aufweist.

Andere bekannte Vorrichtungen und Verfahren stellen auf eine rein mechanische Lösung ab. Beispielsweise gehen aus der Offenlegungsschrift DE 2102590 ein Verfahren und eine Vorrichtung zum mechanischen Ausrichten von Fischen in Bauch-Rückenlage hervor. Auf die Fische wirkt eine elastische Rolle ein, die aufgrund der Querschnittsform unsymmetrisch auf den jeweiligen Fisch drückt und so eine Kraftkomponente auf die Fische erzeugt wird, die diese in Richtung der Fischrückseite verschiebt.

Ein Nachteil solcher rein mechanischer Ausrichter besteht darin, dass einerseits die Fische stark mechanisch belastet werden und andererseits die Ausrichter nur eine geringe Zuverlässigkeit hinsichtlich einer korrekten Bauch-Rücken-Ausrichtung aufweisen, insbesondere bei der Verarbeitung von Fischen geringer Qualität.

Es ist daher Aufgabe der vorliegenden Erfindung, eine möglichst robuste Vorrichtung vorzuschlagen, die die Ausrichtung von Fischen in die geforderte Bauch-Rückenlage mit hoher Zuverlässigkeit gewährleistet.

Die Aufgabe besteht auch darin, eine Vorrichtung vorzuschlagen, die auf rein mechanischem Wege die Ausrichtung der Fische bewirkt. Des Weiteren besteht die Aufgabe darin, ein entsprechendes Verfahren vorzuschlagen.

Die Aufgabe wird durch eine Vorrichtung mit den eingangs genannten Merkmalen gelöst, wobei diese umfasst: eine zur Kopfvoraus-Förderung von Fischen in Seitenlage eingerichtete erste Fördereinrichtung mit einem zum Führen der Fische in Förderrichtung eingerichteten Zuführkanal, der einen eine erste Förderebene bildenden Kanalboden aufweist; mindestens eine von dem Kanalboden beabstandet angeordnete und zur Querpositionierung der Fische in dem Zuführkanal eingerichtete Führungsrolle, die sich über die Breite des Zuführkanals erstreckt und mindestens einen Abschnitt mit reduziertem Querschnittsdurchmesser aufweist, wobei der Kanalboden kanalmittig eine sich in Förderrichtung weitende Überführungsausnehmung umfasst, die zum Überführen der Fische durch Schwerkrafteinwirkung an einen unterhalb der ersten Förderebene angeordneten Leitkanal unter Ausrichtung in eine vorgegebene Bauch-Rückenlage ausgebildet ist, wobei der Leitkanal gegenüber der ersten Förderebene jeweils geneigt angeordnete Seitenführungsflächen aufweist; und weiter eine eine zweite Förderebene bildende und zur Förderung der Fische in Seitenlage eingerichtete zweite Fördereinrichtung, die zur Übernahme der Fische am Leitkanalende, dem Leitkanal nachgeordnet ist.

Die erfindungsgemäße Vorrichtung bietet den Vorteil, dass die Fische bezüglich der gewünschten Bauch-Rücklage mit hoher Zuverlässigkeit ausgerichtet werden, ohne dass es komplizierter Sensorik oder Aktorik bedarf. Die erfindungsgemäße Vorrichtung kommt vollständig ohne derartige elektrotechnische Komponenten aus, sondern besteht ausschließlich aus mechanischen Komponenten, wodurch die erfindungsgemäße Vorrichtung zudem äußerst robust ist. Durch das Zusammenspiel der Führungsrolle mit dem mindestens einen Abschnitt mit reduziertem Querschnittsdurchmesser, der Überführungsausnehmung und dem Leitkanal findet eine selbsttätige Ausrichtung der Fische hinsichtlich ihrer Bauch-Rückenlage aufgrund der typischen Querschnittsgeometrie des Fischkörpers statt. Aufgrund der Führungsrolle mit mindestens einem Abschnitt mit reduziertem Querschnittsdurchmesser werden die Fische unter Einwirkung minimaler Führungskräfte quer zur Förderrichtung in dem Zuführkanal ausgerichtet und anschließend über die Überführungsausnehmung in den Leitkanal überführt, so dass keine Schädigungen oder Quetschungen der Fischkörper durch diese Führungskräfte auftreten.

Eine weitere zweckmäßige Ausbildung der Erfindung ist dadurch gekennzeichnet, dass der Abschnitt mit reduziertem Querschnittsdurchmesser der Führungsrolle bezüglich der Zuführkanalmitte außermittig angeordnet ist. Das Zusammenwirken dieser außermittig angeordneten Führungsrolle mit der Querschnittgeometrie der Fische führt dazu, dass die Fische in dem Zuführkanal quer zu der Förderrichtung verschiedene Positionen in Abhängigkeit davon einnehmen, ob der jeweilige Fisch mit der Bauchseite bereits bezüglich der Förderrichtung nach links zeigt oder nach rechts.

Gemäß einer weiteren bevorzugten Ausführungsform ist der Querschnittsdurchmesser der Führungsrolle ausgehend von dem Abschnitt mit reduziertem Querschnittsdurchmesser jeweils zu den Außenabschnitten der Führungsrolle hin zunehmend eingerichtet. Vorteilhafterweise werden die Fische mittels des Führungsrollenprofils grundsätzlich in Richtung der Mitte des Zuführkanals mit fortlaufendem Passieren des Zuführkanals ausgerichtet. Die exakte Position der Fische quer zu der Förderrichtung ist jedoch - wie zuvor beschrieben - abhängigen von der Fischausrichtung beim Einlauf in den Zuführkanal.

Eine weitere zweckmäßige Ausgestaltung der Erfindung ist dadurch gekennzeichnet, dass der Abschnitt mit reduziertem Querschnittsdurchmesser zusammen mit den Außenabschnitten eine konkave Außenkontur der Führungsrolle bilden. Die konkave Außenkontur bildet zumindest im Wesentlichen das Pendant zu Querschnittsgeometrie der Fische. Hierdurch werden die Fische mit großer Zuverlässigkeit in dem Zuführkanal lageabhängig querpositioniert. Vorzugsweise ist die Führungsrolle im Bereich der Außenabschnitte jeweils zumindest im Wesentlichen kegelstumpfförmig ausgebildet. Die Führungsrolle weist folglich vorzugsweise eine Doppelkegelstumpfstruktur auf.

Eine bevorzugte Weiterbildung der Erfindung zeichnet sich dadurch aus, dass die Außenkontur absatzfrei ausgebildet ist. Hierdurch wird ein möglichst flächiger Kontakt zwischen der Führungsrolle und dem Fisch hergestellt, so dass die auf den Fisch wirkenden Führungskräfte flächenlastartig wirken und keine großen Punkt- oder Linienlasten auf diesen ausgeübt werden. Der Fisch wird auf diese Weise besonders schonend quer zur Förderrichtung in dem Zuführkanal ausgerichtet.

Eine weitere zweckmäßige Ausbildung der Erfindung ist dadurch gekennzeichnet, dass die Führungsrolle ausweichlich gelagert angeordnet ist. Dies bietet den Vorteil, dass die Führungsrolle beim Durchgang von Fischen verschiedener Größe selbsttätig ausweicht, so dass die auf die Fische wirkenden Kräfte eine vorgebbare Maximalkraft nicht überschreiten. Vorzugsweise erfolgt das Ausweichen der Führungsrolle entgegen der Schwerkraft. Die mittels der Führungsrolle erzeugbare Andruckkraft kann auf diese Weise durch das Eigengewicht der Führungsrolle vorgegeben werden. Optional ist die Führungsrolle an einem Schwenkarm ausweichlich gelagert. Die Größe der Andrucckraft kann in diesem Fall durch die Länge des Schwenkarms, das Eigengewicht der Führungsrolle, zusätzlichen am Schwenkarm angeordnete Zusatzgewichte und/oder durch Federvorspannung eingestellt werden.

Gemäß einer weiteren bevorzugten Ausbildung der Erfindung ist mindestens eine der Führungsrollen in der Förderrichtung vor der Überführungsausnehmung angeordnet. Auf diese Weise werden die Fische in dem Zuführkanal bezüglich ihrer Position quer zu der Förderrichtung vorausgerichtet und entsprechend ihrer ursprünglichen Bauch-Rückenlage in unterschiedlichen Querpositionen an die Überführungsausnehmung herangeführt.

Gemäß einer weiteren bevorzugten Ausbildung der Erfindung ist mindestens eine der Führungsrollen in einem Eingangsbereich der Überführungsausnehmung angeordnet, innerhalb dessen die Breite der Überführungsausnehmung geringer als die Endweite der Überführungsausnehmung ist. Auf diese Weise wird auch beim Einlaufen der Fische in den Eingangsbereich der Überführungsausnehmung stets eine adäquate Führung der Fische bezüglich ihrer Querposition in dem Zuführkanal gewährleistet. Dies wirkt sich vorteilhaft auf die Zuverlässigkeit der erfindungsgemäßen Vorrichtung aus, so dass der Anteil an Fischen, die den Leitkanal mit einer nicht korrekten, der vorgegebenen Bauch-Rücklage nicht entsprechenden, Bauch-Rückenlageausrichtung auf ein Minimum reduziert ist.

Gemäß einer weiteren bevorzugten Ausbildung der Erfindung sind die Neigungen der Seitenführungsflächen des Leitkanals jeweils unterschiedlich. Die unterschiedlichen Neigungen der Seitenführungsflächen des Leitkanals unterstützten die Selektionswirkung, nämlich ob ein die Überführungsausnehmung passierender Fisch bezüglich seiner Bauch-Rückenlage zu wenden ist, oder ob dieser seine bereits vorhandene Ausrichtung beibehält. Eine bevorzugte Weiterbildung der Erfindung zeichnet sich dadurch aus, dass der Leitkanal im Querschnitt zumindest im Wesentlichen dreiecksförmig ist.

Eine weitere zweckmäßige Ausbildung der Erfindung ist dadurch gekennzeichnet, dass die Seitenführungsflächen des Leitkanals derart geneigt angeordnet sind, dass diese einen Leitkanalboden bilden, der zumindest im Wesentlichen fluchtend zum Abschnitt der Führungsrolle mit reduziertem Querschnittsdurchmesser ausgerichtet ist. Hierdurch wird die zuvor beschriebene Selektionswirkung der vorliegenden Erfindung weiter verbessert. Aufgrund der genannten Lagebeziehung des Leitkanalbodens zu dem Abschnitt der Führungsrolle mit reduziertem Querschnittsdurchmesser wird erreicht, dass Fische, die nicht in der gewünschten vorgegebenen Bauch-Rückenlageausrichtung den Zuführkanal passierten, beim Erreichen der Überführungsausnehmung mit ihrer Rückenseite nach unten gerichtet über die Überführungsausnehmung in den Leitkanal überführt werden und in diesem geführt von den Seitenführungsflächen des Leitkanals derart gestützt werden, dass die Fische ihre Ausrichtung bezüglich der Bauch-Rückenlage verändern.

Eine weitere zweckmäßige Ausbildung der Erfindung ist dadurch gekennzeichnet, dass in dem Zuführkanal jeweils seitlich Abweiserelemente angeordnet sind, die sich jeweils ausgehend von den Seitenwänden des Zuführkanals in Richtung der Überführungsausnehmung erstrecken.

Gemäß einer weiteren bevorzugten Ausführungsform ist der der Kanalboden des Zuführkanals rau und die erste Fördereinrichtung als Rüttelförderer ausgebildet.

Des Weiteren wird die Aufgabe durch ein entsprechendes Verfahren mit den eingangs genannten Merkmalen dadurch gelöst, dass das Verfahren die folgenden Schritte umfasst: Kopfvoraus-Fördern von Fischen in Seitenlage mittels einer ersten Fördereinrichtung und Zuführen der Fische in Förderrichtung mittels eines Zuführkanals, der einen eine erste Förderebene bildenden Kanalboden aufweist, wobei der Kanalboden kanalmittig eine sich in Förderrichtung weitende Überführungsausnehmung umfasst; Querpositionieren der Fische in dem Zuführkanal mittels mindestens einer von dem Kanalboden beabstandet angeordneten Führungsrolle, die sich über die Breite des Zuführkanals erstreckt und mindestens einen Abschnitt mit reduziertem Querschnittsdurchmesser aufweist; Überführen der Fische durch Schwerkrafteinwirkung an einen unterhalb der ersten Förderebene angeordneten Leitkanal unter Ausrichtung in eine vorgegebene Bauch-Rückenlage, wobei der Leitkanal gegenüber der ersten Förderebene jeweils geneigt angeordnete Seitenführungsflächen umfasst; und Übernehmen der Fische am Leitkanalende mittels einer eine zweite Förderebene bildenden zweiten Fördereinrichtung und Fördern der Fische in Seitenlage mittels der zweiten Fördereinrichtung.

Eine bevorzugte Weiterbildung der Erfindung zeichnet sich durch das Querpositionieren der Fische mittels der Führungsrolle aus, das dadurch erfolgt, dass die Führungsrolle einen Abschnitt mit reduziertem Querschnittsdurchmesser aufweist, der bezüglich der Zuführkanalmitte außermittig angeordnet ist.

Gemäß einer weiteren bevorzugten Ausbildung der Erfindung erfolgt das Querpositionieren der Fische abhängig von der Bauch-Rückenlage der Fische mittels der Führungsrolle, deren Querschnittsdurchmesser ausgehend von dem Abschnitt mit reduziertem Querschnittsdurchmesser hin zu Außenabschnitten der Führungsrolle zunimmt.

Eine weitere zweckmäßige Ausgestaltung der Erfindung ist dadurch gekennzeichnet, dass das Querpositionieren mittels der Führungsrolle durch eine konkave Außenkontur bewirkt wird, die der Abschnitt mit reduziertem Querschnittsdurchmesser zusammen mit den Außenabschnitten bildet.

Gemäß einer weiteren bevorzugten Ausbildung der Erfindung weicht die Führungsrolle gegen Rückstellkraft beim Querpositionieren der Fische aus.

Eine weitere zweckmäßige Ausbildung der Erfindung ist dadurch gekennzeichnet, dass die Fische zunächst mittels der Führungsrolle quer zu der Förderrichtung in dem Zuführkanal ausgerichtet werden und anschließend die Überführungsausnehmung passieren.

Eine weitere zweckmäßige Ausbildung der Erfindung ist gekennzeichnet durch Fördern der Fische mittels der ersten Fördereinrichtung durch Rütteln.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert.

Anhand der Gruppe 1 bis 6 der Figuren werden Aufbau und Funktionsweise der erfindungsgemäßen Vorrichtung sowie des erfindungsgemäßen Verfahrens beispielhaft am Durchlauf eines Fisches erläutert, der beim Einlaufen in die Vorrichtung nicht die gewünschte Ausrichtung der Bauch-Rückenlage aufweist, und beim Durchlaufen der Vorrichtung um seine Längsachse so gedreht wird, dass beim Auslaufen aus der Vorrichtung die gewünschte Ausrichtung erzielt wird. Es wird bei den folgenden Erläuterungen davon ausgegangen, dass eine Bauch-Rücklagen-Ausrichtung gewünscht ist, bei der der Bauch des Fisches in Förderrichtung nach links zeigt, während der Rücken des Fisches in Förderrichtung nach rechts zeigt.

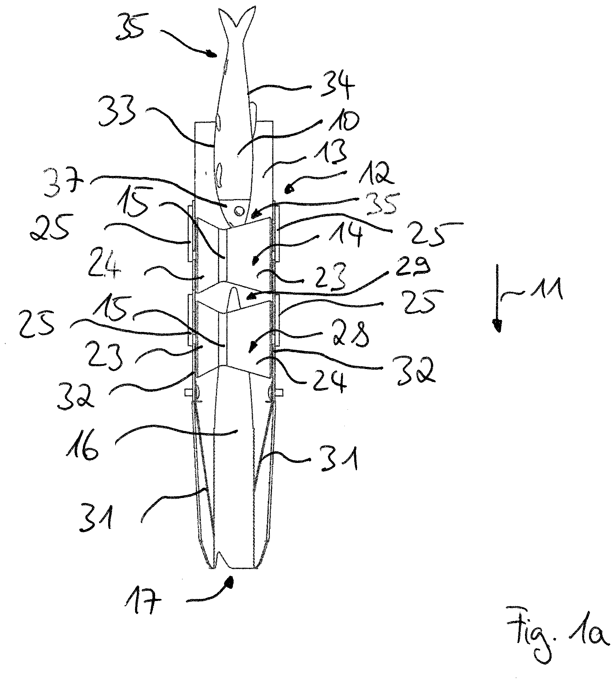

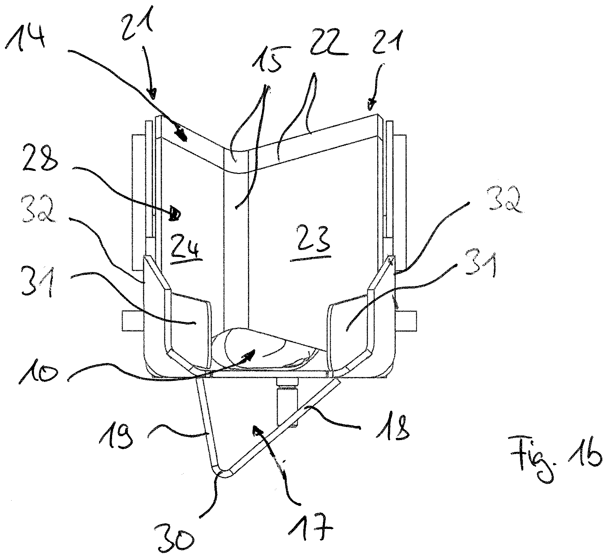

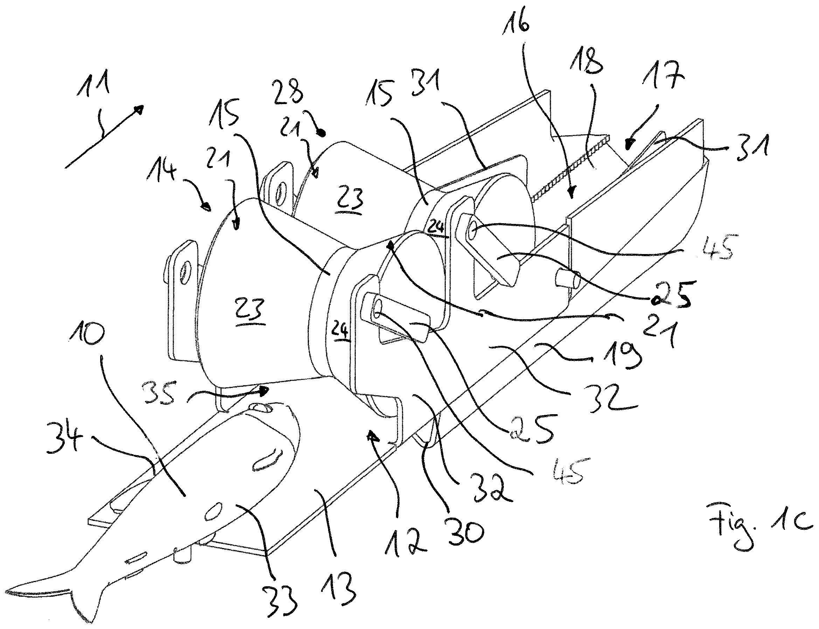

Jede der genannten Gruppen umfasst jeweils zwei oder drei Ansichten aus verschiedenen Perspektiven. Die Figur 1a zeigt beispielsweise eine Draufsicht beim Einlaufen des Fisches in die erfindungsgemäße Vorrichtung, Figur 1b eine Seitenansicht mit Blickrichtung entgegen der Förderrichtung sowie Figur 1c eine perspektivische Ansicht mit Blickrichtung in Förderrichtung. Die Figuren der Gruppen 2 bis 6 stellen die erfindungsgemäße Vorrichtung in analoger Weise dar.

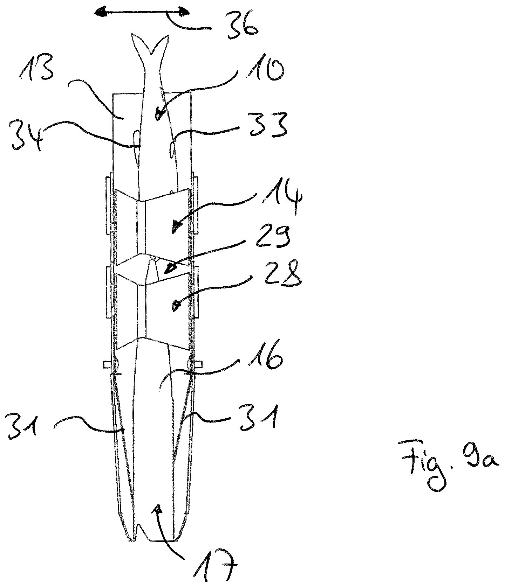

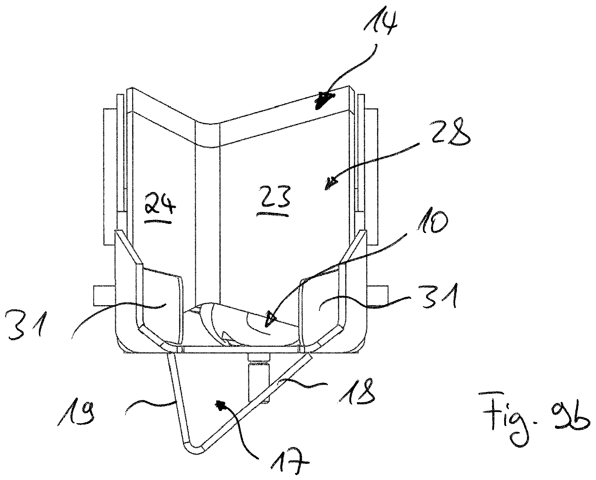

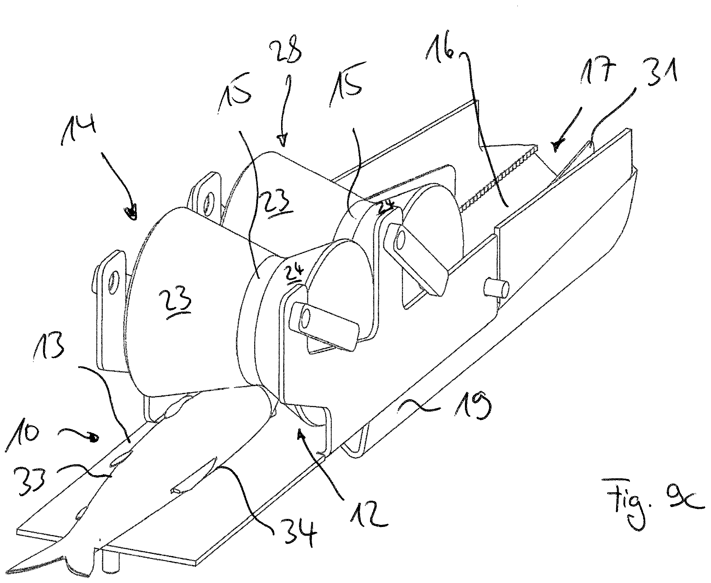

Die Gruppen der Figuren 8 bis 14 zeigen in vergleichbarer Weise die erfindungsgemäße Vorrichtung sowie das erfindungsgemäße Verfahren beim Durchgang eines Fisches, der sich bereits in der gewünschten Bauch-Rückenlage-Ausrichtung beim Einlaufen in die erfindungsgemäße Vorrichtung befindet.

Figur 15 zeigt eine perspektivische Ansicht der erfindungsgemäßen Vorrichtung mit Blickrichtung entgegen der Förderrichtung,

Figur 16 zeigt die in Figur 15 gezeigte Vorrichtung gemäß einer alternativen Ausführung,

Figur 17 zeigt eine perspektivische Ansicht von vier parallel angeordneten erfindungsgemäßen Vorrichtungen mit vorgeschalteter Zuführeinheit.

Figur 18 zeigt einen vergrößerte Detaildarstellung eines Teilausschnitts der Figur 17.

Anhand der Figuren werden die erfindungsgemäße Vorrichtung sowie das erfindungsgemäße Verfahren im Detail erläutert.

Die erfindungsgemäße Vorrichtung soll im Folgenden zunächst anhand der Figuren 1a, 1b und 1c näher erläutert werden. Die Vorrichtung umfasst eine zur Kopfvoraus-Förderung von Fischen 10 in Seitenlage eingerichtete erste Fördereinrichtung mit einem zum Führen der Fische 10 in Förderrichtung 11 eingerichteten Zuführkanal 12, der einen eine erste Förderebene bildenden Kanalboden 13 aufweist.

Über dem Kanalboden 13 ist mindestens eine von dem Kanalboden 13 beabstandete Führungsrolle 14 angeordnet. Die Führungsrolle 14 ist zur Querpositionierung der Fische 10 in dem Zuführkanal 12 eingerichtet. Die Führungsrolle 14 erstreckt sich über die Breite des Zuführkanals 12. Die Führungsrolle 14 weist mindestens einen Abschnitt 15 mit reduziertem Querschnittsdurchmesser auf.

Wie in Figur 1a gezeigt, weist der Kanalboden 13 kanalmittig eine sich in Förderrichtung 11 weitende Überführungsausnehmung 16 auf. Diese ist zum Überführen der Fische 10 unter Schwerkrafteinwirkung an einen unterhalb der ersten Förderebene angeordneten Leitkanal 17 ausgebildet und eingerichtet. Beim Überführen der Fische 10 werden diese in eine vorgegebene Bauch-Rückenlage verbracht. Der Leitkanal 17 umfasst gegenüber der ersten Förderebene jeweils geneigt angeordnete Seitenführungsflächen 18, 19.

Wie in Figur 1b gezeigt, ist der Abschnitt 15 mit reduziertem Querschnittsdurchmesser der Führungsrolle 14 bezüglich der Zuführkanalmitte außermittig angeordnet. Anders ausgedrückt ist der Abschnitt 15 bezüglich einer in der Förderrichtung verlaufenden Symmetrieachse des Zuführkanals 12 exzentrisch angeordnet. Die Symmetrieachse des Zuführkanals 12 fällt damit nicht mit dem Abschnitt 15 mit reduziertem Querschnittsdurchmesser zusammen.

In Figur 1b ist gezeigt, wie der Querschnittsdurchmesser der Führungsrolle 14 ausgehend von dem Abschnitt 15 mit reduziertem Querschnittsdurchmesser jeweils hin zu Außenabschnitten 21 der Führungsrolle 14 zunehmend eingerichtet ist. Mit anderen Worten weist die Führungsrolle 14 in dem Abschnitt 15 einen gegenüber den Außenabschnitten 21 reduzierten Durchmesser auf. Auf diese Weise bildet der Abschnitt 15 mit reduziertem Querschnittsdurchmesser zusammen mit den Außenabschnitten 21 eine konkave Außenkontur 22 der Führungsrolle 14.

Vorzugsweise ist die Führungsrolle 14 im Bereich der Außenabschnitte 21 jeweils zumindest im Wesentlichen kegelstumpfförmig ausgebildet ist. Die Führungsrolle 14 ist konstruktiv daher im Wesentlichen aus zwei Kegelstumpfelementen 23, 24 zusammengesetzt. Weiter bevorzugt ist die Außenkontur 22 absatzfrei ausgebildet ist.

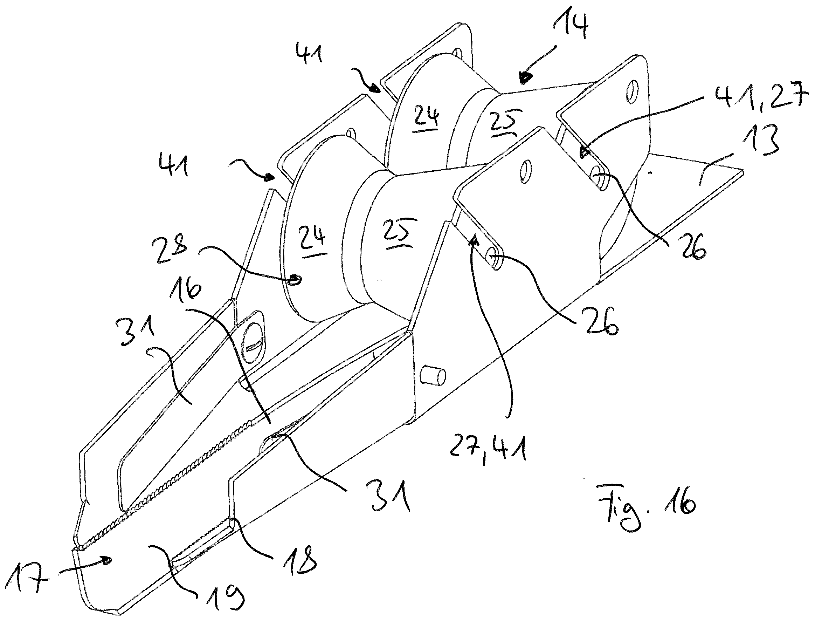

Wie aus Figur 1c ersichtlich ist, ist die Führungsrolle 14 ausweichlich gelagert angeordnet. Die Führungsrolle 14 ist beidseitig mittels Hebelarmen 25 schwenkbar angeordnet. Die Hebelarme 25 schwenken dabei um eine Schwenkachse 45. Figur 16 zeigt eine alternative bewegliche Anordnung der Führungsrolle14. Die Drehachse 26 der Führungsrolle 14 ist jeweils in Ausnehmungen 27 gelagert, die in Förderrichtung 11 schräg verlaufend eingerichtet sind.

Die Anzahl der Führungsrollen 14 ist nicht auf eine beschränkt. Wie in der Zeichnung gezeigt, kommt bevorzugt eine weitere Führungsrolle 28 zum Einsatz. Die konstruktiven Eigenschaften der weiteren Führungsrolle 28 gleichen den im Zusammenhang mit der Führungsrolle 14 beschriebenen Eigenschaften. Vorzugsweise ist die eine der Führungsrollen 14 in der Förderrichtung 11 vor der Überführungsausnehmung 16 angeordnet. Weiter bevorzugt ist mindestens eine der Führungsrollen 14 in einem Eingangsbereich 29 der Überführungsausnehmung 16 angeordnet, innerhalb dessen die Breite der Überführungsausnehmung 16 geringer als die Endweite der Überführungsausnehmung 16 ist.

Figur 1b zeigt, dass die Neigungen der Seitenführungsflächen 18, 19 des Leitkanals 17 vorzugsweise jeweils unterschiedlich sind. Der Leitkanal 17 bildet im Querschnitt zumindest im Wesentlichen eine Dreiecksform. Weiter bevorzugt sind die Seitenführungsflächen 18, 19 des Leitkanals 17 derart geneigt angeordnet, dass diese einen Leitkanalboden 30 bilden, der zumindest im Wesentlichen fluchtend zum Abschnitt 15 der Führungsrolle 14 mit reduziertem Querschnittsdurchmesser ausgerichtet ist.

Vorzugsweise sind in dem Zuführkanal 12 jeweils seitlich Abweiserelemente 31 angeordnet, die sich jeweils ausgehend von den Seitenwänden 32 des Zuführkanals 12 in Richtung der Überführungsausnehmung 16 erstrecken.

Vorteilhafterweise ist der Kanalboden 13 des Zuführkanals 12 rau und die erste Fördereinrichtung als Rüttelförderer ausgebildet. Durch das Zusammenwirken der rauen Oberfläche des Zuführkanals 12 und der Rüttelbewegung der Fördereinrichtung in Förderrichtung 11 werden die Fische 10 aufgrund ihrer Schuppenstruktur in der Förderrichtung durch den Zuführkanal 12 gefördert.

Die Funktionsweise der erfindungsgemäßen Vorrichtung sowie des erfindungsgemäßen Verfahrens soll im Folgenden zunächst anhand der Figurengruppen 1 bis 6 erläutert werden, die den Durchlauf eines Fisches zeigen, der beim Eintritt in den Zuführkanal 12 nicht die gewünschte Ausrichtung bezüglich seiner Bauch-Rückenlage aufweist.

Die Figuren 1a, 1b und 1c zeigen, dass der Fisch 10 - mit Blickrichtung in Förderrichtung 11 - mit seiner Bauchseite 33 nach rechts ausgerichtet ist, während die Rückenseite 34 des Fisches 10 nach links zeigt.

Aus Gründen einer einheitlichen Darstellung wird im Folgenden die Ausrichtung der Fische 10 bezüglich der Bauch-Rückenlage immer aus Blickrichtung in Förderrichtung 11 angegeben.

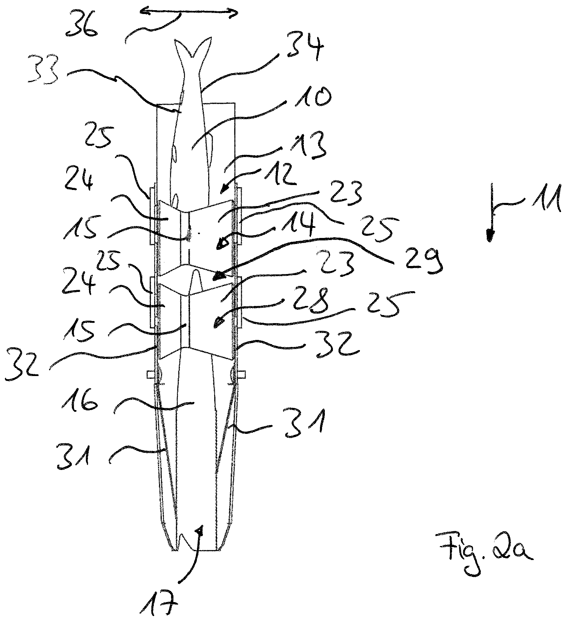

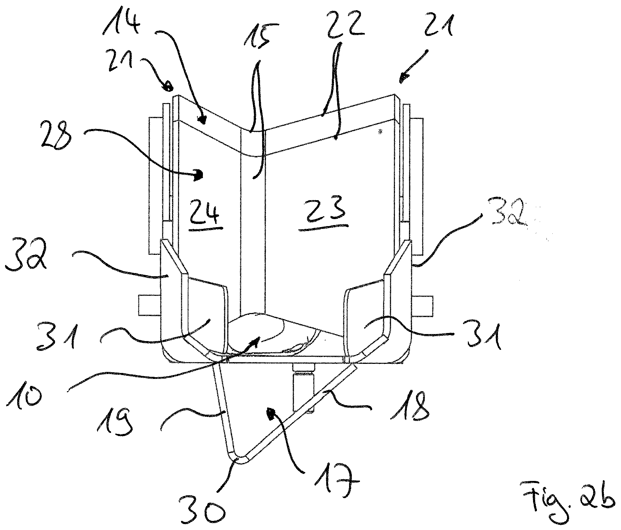

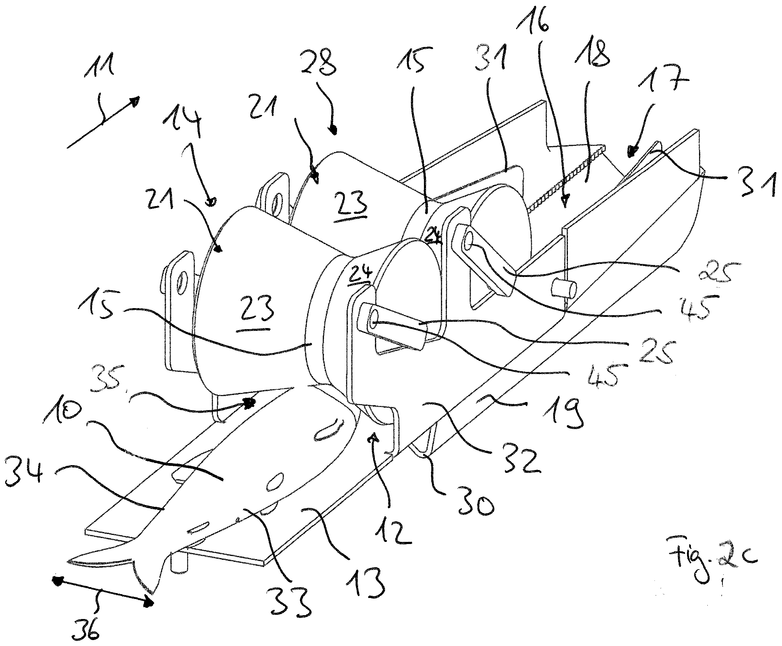

Wie in den Figuren 1a, 1b und 1c gezeigt, gelangt der Fisch 10 mit der Führungsrolle 14 erstmals in Eingriff. Aufgrund der zuvor beschriebenen Geometrie der Führungsrolle 14 findet eine Querpositionierung des Fisches 10 statt. Den Figuren 2a, 2b und 2c ist zu entnehmen, dass der Fisch 10 aus seiner Einlaufposition 35 - vgl. Figuren 1a, 1b und 1c - in eine Querausrichtposition, wie in den Figuren 2a, 2b und 2c gezeigt, quer zur Förderrichtung 11 ausgerichtet wird. Der Fisch 10 wird mittels der Führungsrolle 14 so in Querrichtung ausgerichtet, dass der Bereich größter Breite des Fisches 10 sich im Bereich des Abschnitts 15 mit reduziertem Querschnittsdurchmesser der Führungsrolle 14 befindet.

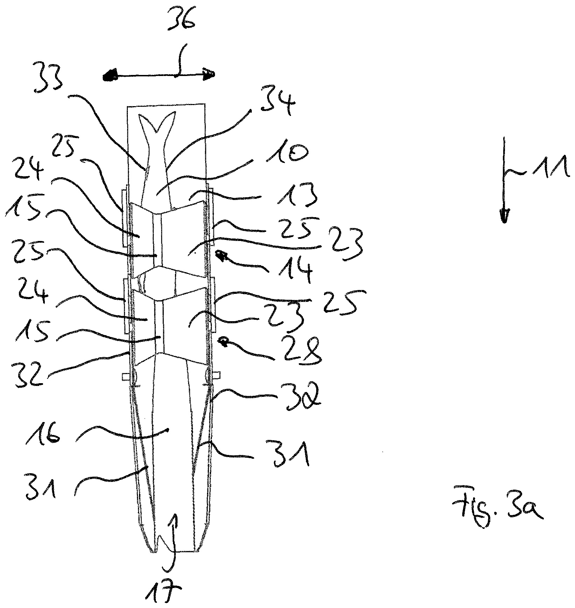

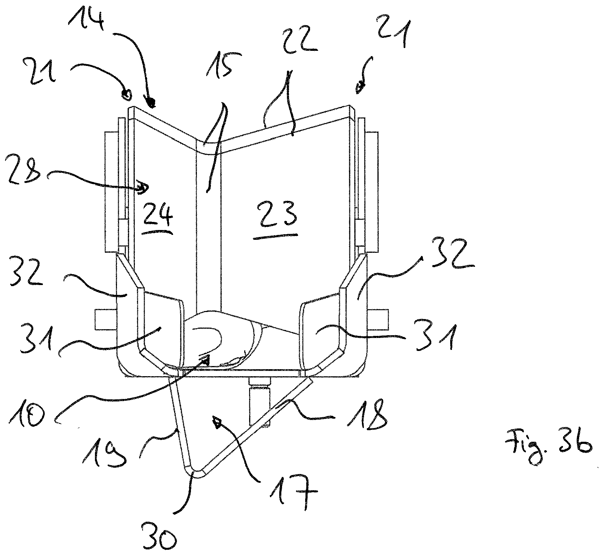

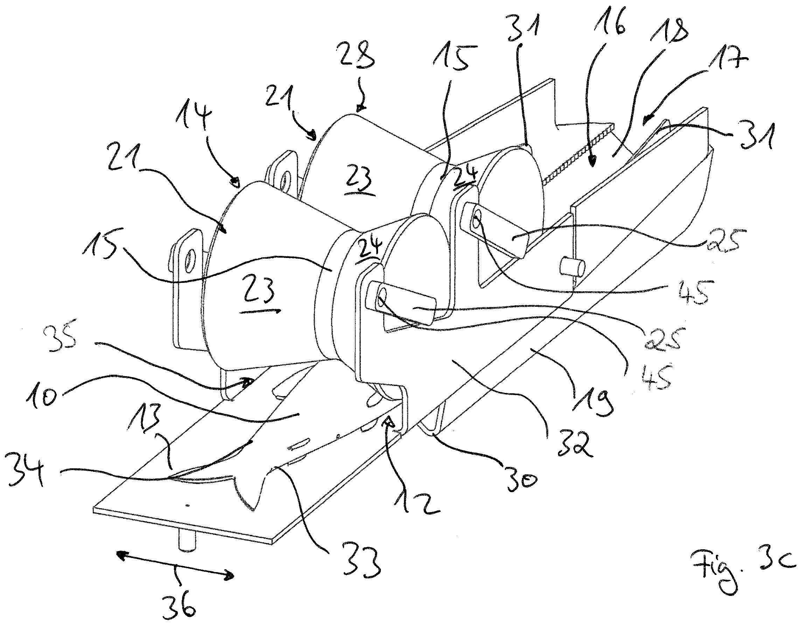

Wie in den Figuren 3a, 3b und 3c gezeigt, erreicht der Fisch 10 mit seinem Kopf 37 die Überführungsausnehmung 16. Die weitere Führungsrolle 28 trägt dazu bei, die Querposition des Fisch 10 auch im Bereich der Überführungsausnehmung 16 weiterhin zu halten.

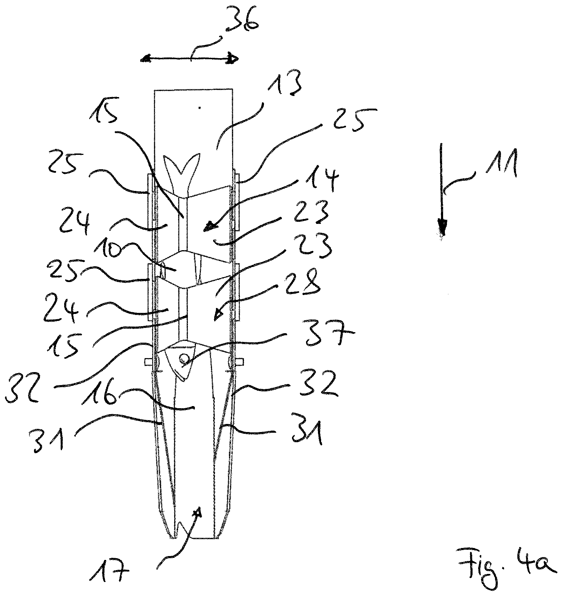

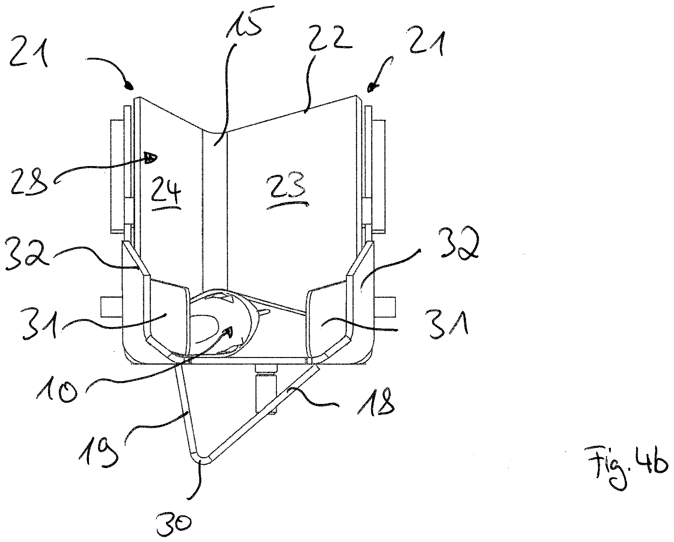

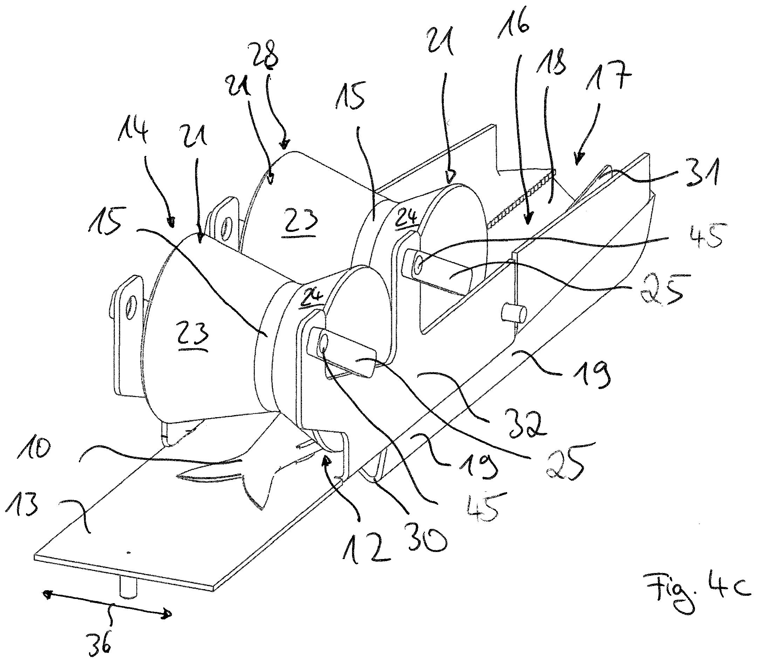

In den Figuren 4a, 4b und 4c ist gut zu sehen, dass der Fisch 10 konstant die einmal erreichte Querausrichtposition 36 beibehält, auch wenn sich dieser bereits zum Teil über der Überführungsausnehmung 16 befindet und nicht mehr durch den Kanalboden 13 gestützt wird.

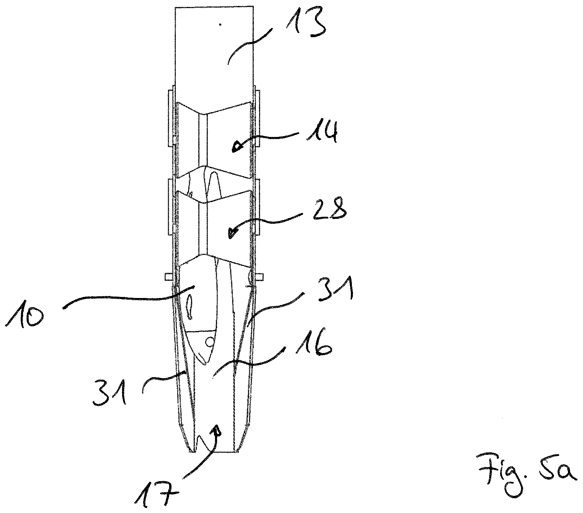

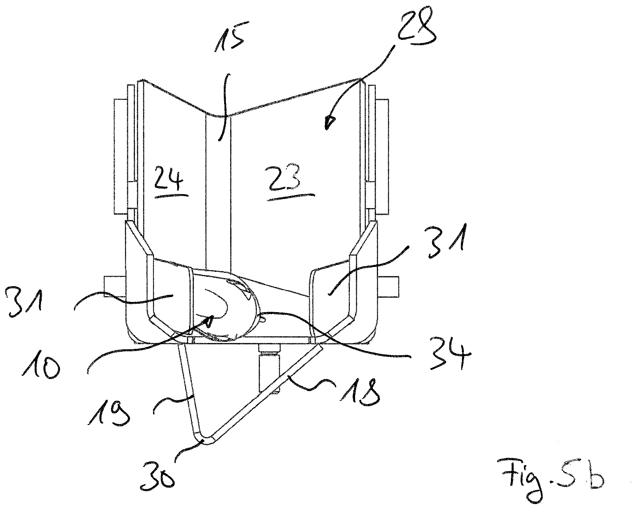

Die Figuren 5a und 5b zeigen eine erste Momentaufnahme, in der der Fisch 10 bereits soweit in Förderrichtung 11 gefördert worden ist, dass die Weitung der Überführungsausnehmung 16 ein Maß erreicht hat, welches eine vollständige Stützung des Fisches 10 durch den Kanalboden 13 fehlen lässt. Der Fisch 10 kippt nun mit seiner Rückenseite 34 voraus der Schwerkraft folgend in Richtung des Leitkanalbodens 30. Hierdurch erfährt der Fisch 10 einen Drehimpuls um seine Längsachse.

Aus Gründen der besseren Übersicht wird in den Figuren der Gruppen 6 bis 14 auf eine vollständige Wiedergabe sämtlicher Bezugszeichen verzichtet. Die gezeigten Figuren zeigen jeweils verschiedene Stadien beim Durchgang eines der Fische 10 in Förderrichtung 11 und sind somit jeweils im größtenteils identisch.

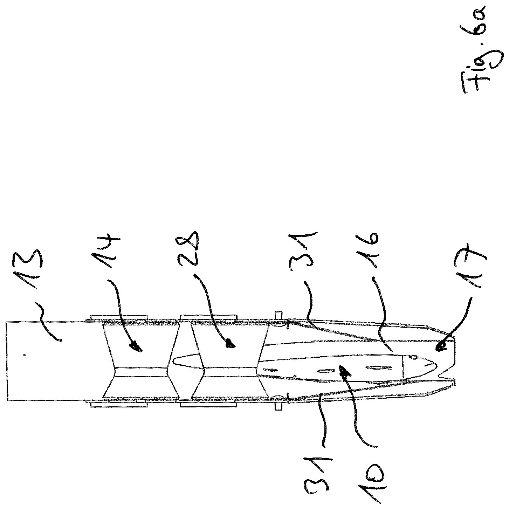

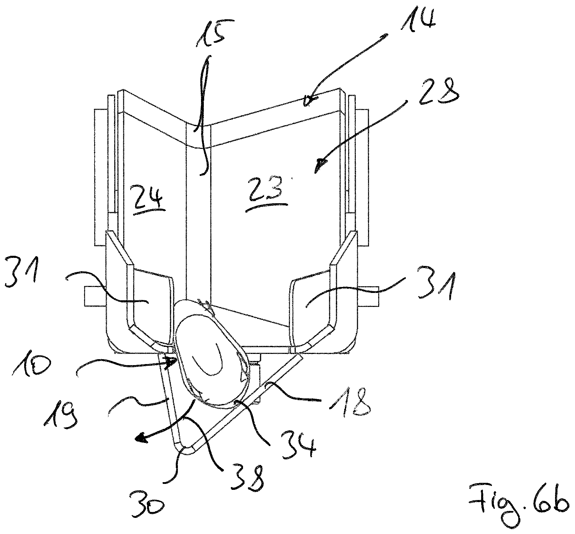

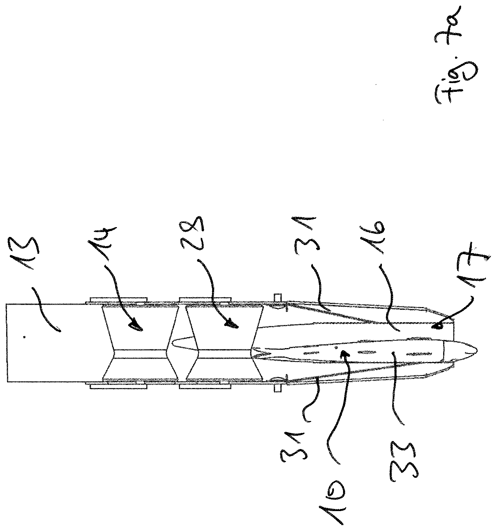

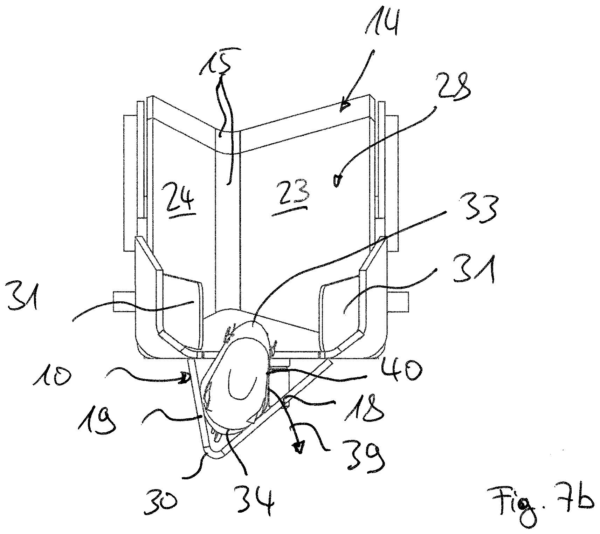

Die Figuren 6a und 6b zeigen eine Momentaufnahme, in der der Fisch 10 mit seiner Rückenseite 34 an der Seitenführungsfläche 18 des Leitkanals 17 anliegt. Aufgrund des vorhandenen Drehimpulses und der Neigung der Seitenführungsfläche 18 rutscht der Fisch 10 unter weiterer Drehung in Richtung des Pfeils 38 in die in den Figuren 7a und 7b gezeigte Lage.

Die Momentaufnahme gemäß den Figuren 7a und 7b zeigt den Fisch 10 beim Erreichen der zuvor beschriebenen Lage. Der Fisch 10 kippt schließlich aus dieser Lage in Richtung des Pfeils 39 auf die Seitenführungsfläche 18 zu und kommt an dieser mit seiner Flanke 40 in Stützanlage, so dass die Bauchseite 33 nun bezüglich der Förderrichtung 11 nach links ausgerichtet ist und damit die gewünschte Bauch-Rückenausrichtung aufweist.

Die Figurengruppen 8 bis 14 zeigen den Durchlauf eines der Fische 10, der bereits die gewünschte Bauch-Rückenlageausrichtung aufweist, nämlich mit der Bauchseite 33 bezüglich der Förderrichtung 11 nach links.

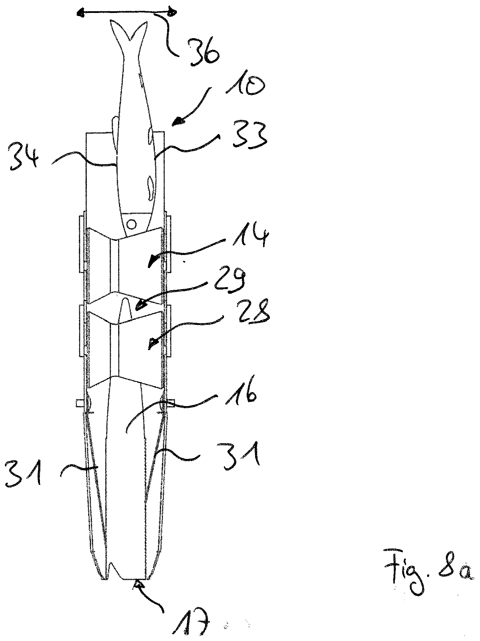

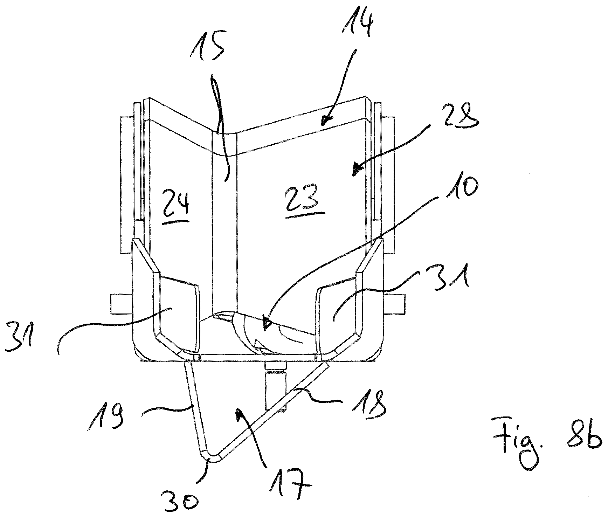

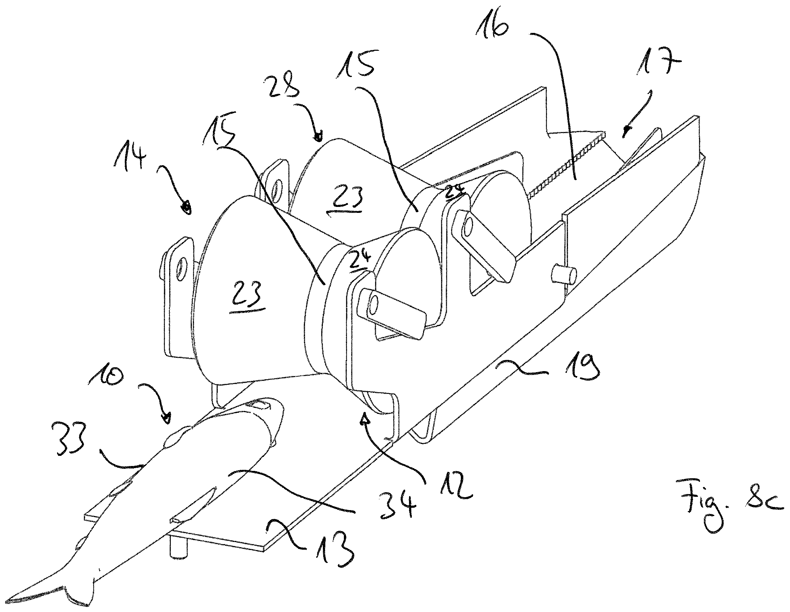

Die Figuren 8a, 8b und 8c zeigen, dass der Fisch 10 - mit Blickrichtung in Förderrichtung 11 - mit seiner Bauchseite 33 bereits nach links ausgerichtet ist, während die Rückenseite 34 des Fisches 10 nach rechts zeigt.

Der Fisch 10 kommt mit der Führungsrolle 14 erstmals in Eingriff. Aufgrund der zuvor beschriebenen Geometrie der Führungsrolle 14 findet eine Querpositionierung des Fisches 10 statt. In diesem Fall wird der Fisch 10 schrittweise bezüglich der Förderrichtung 11 nach rechts bewegt, wie dies beim Vergleich der Figurengruppen 8 und 9 deutlich wird. Auch hier wird der Fisch 10 mittels der Führungsrolle 14 so in Querrichtung ausgerichtet, dass der Bereich größter Breite des Fisches 10 sich im Bereich des Abschnitts 15 mit reduziertem Querschnittsdurchmesser der Führungsrolle 14 befindet. Im Ergebnis führt dies aufgrund der Fischgeometrie und der erfolgten Zuführung des Fisches 10 mit korrekter Bauch-Rücklageausrichtung dazu, dass der Fisch 10 in etwas mittig ausgerichtet zu der Überführungsausnehmung 16 gefördert wird.

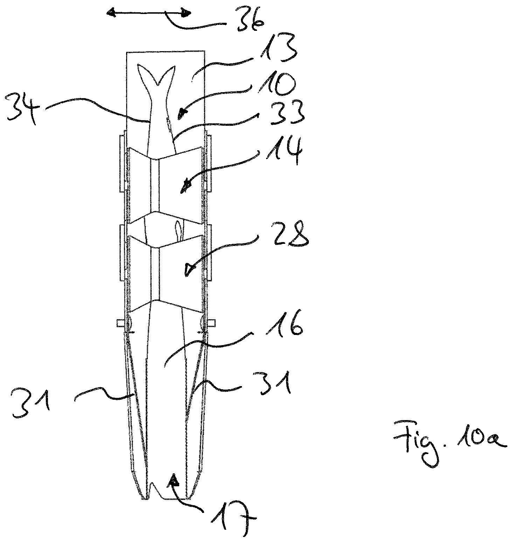

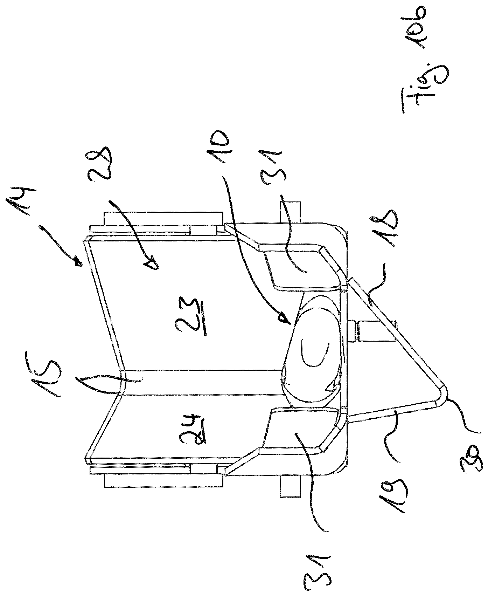

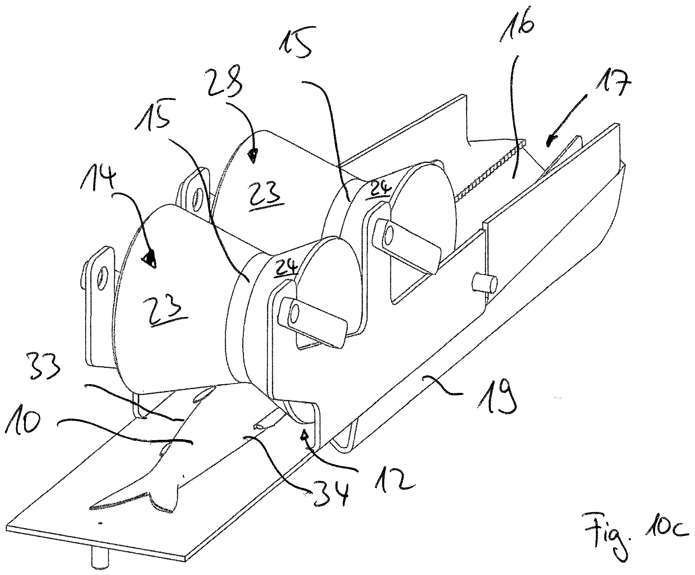

Ein Vergleich der in Figur 10b gezeigten Querausrichtposition 36 des Fisches 10 mit der in Figur 4b gezeigten Querausrichtposition 36 zeigt die Unterschiede deutlich.

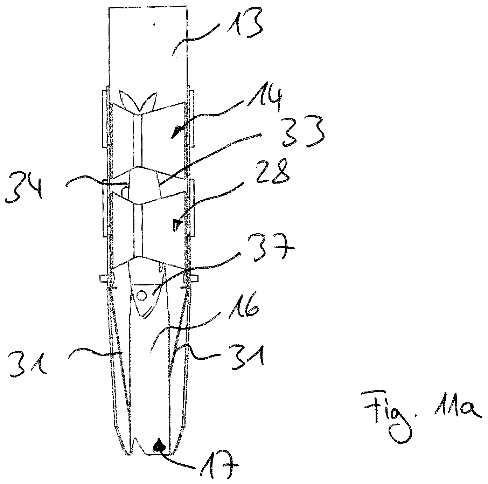

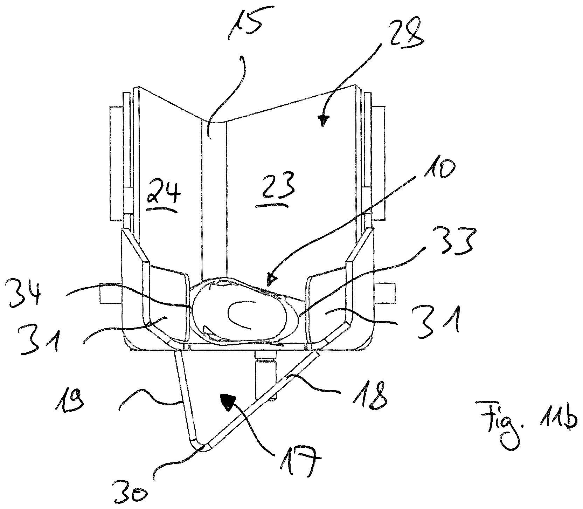

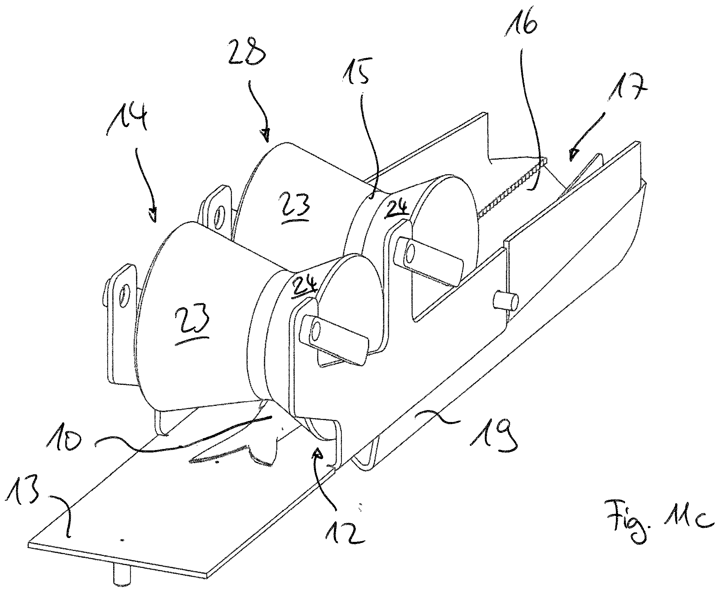

Die Figuren 11a, 11b und 11c zeigen, wie der Fisch 10 mittig zentriert bzw. im Wesentlichen mittig zentriert zu der Überführungsausnehmung 16 gelangt. Die weitere Führungsrolle 28 unterstützt diese konstante Ausrichtung.

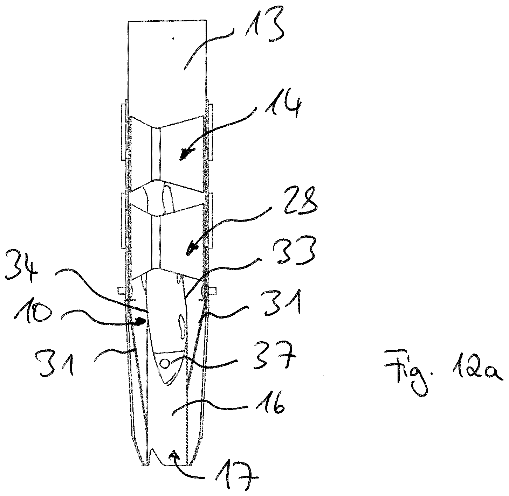

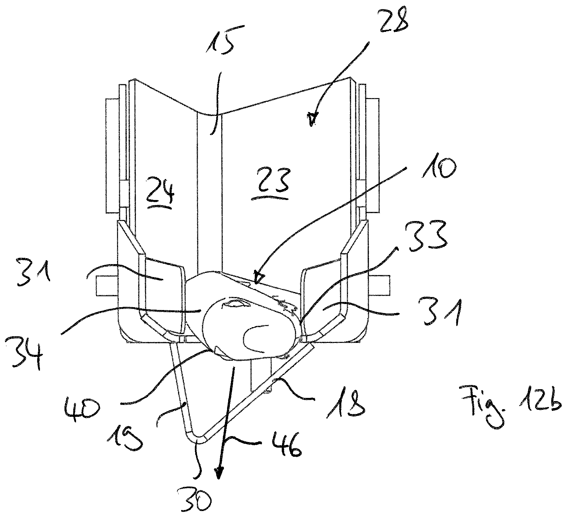

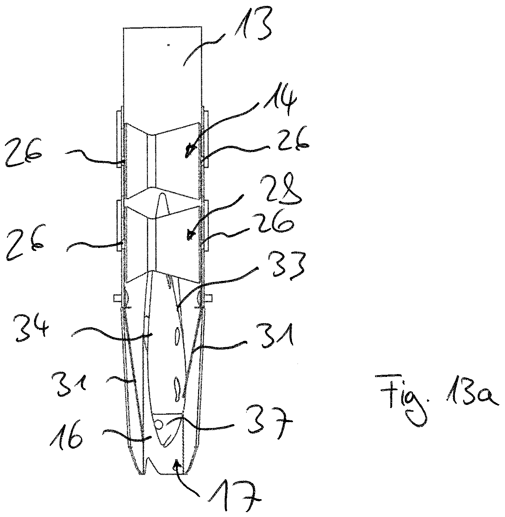

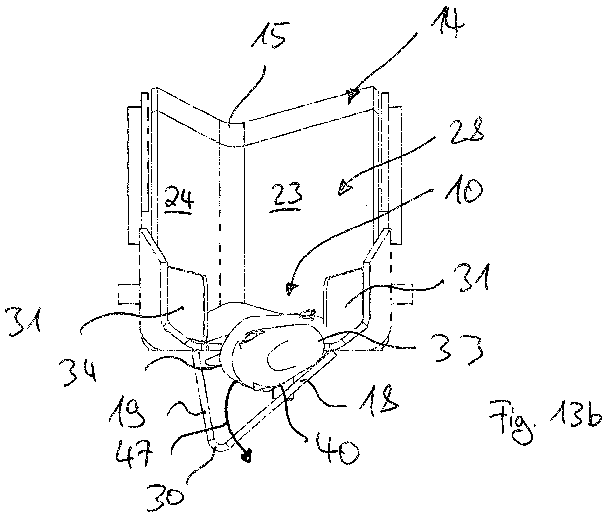

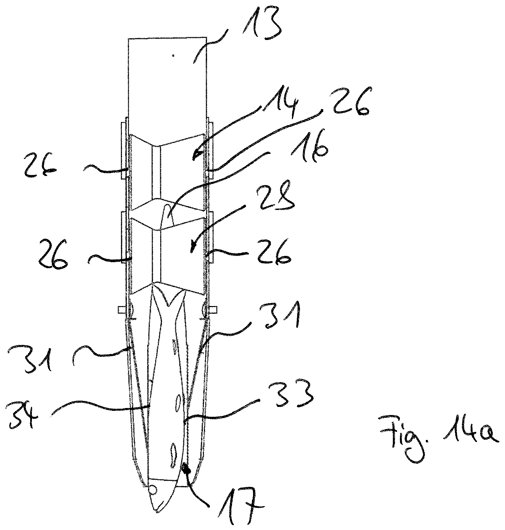

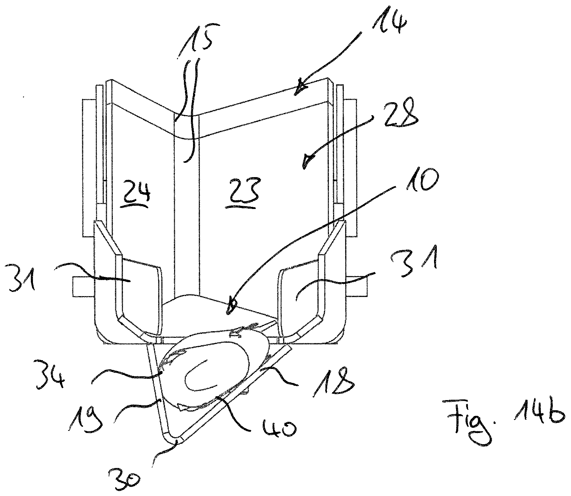

Figuren 12a, 12b sowie 13a, 13b zeigen, wie der Fisch 10 durch die Überführungsausnehmung 16 der Schwerkraft folgend in Richtung des Leitkanalbodens 30 fällt. Wie der Zeichnung zu entnehmen ist, bewegt sich der Fisch 10 mit seiner nach unten gerichteten Seitenflanke 40 auf das Seitenführungselement 18 zu, um schließlich die gewünschte Bauch-Rückenausrichtung entsprechend der Darstellung der Figuren 14a und 14b zu erreichen.

Insbesondere die Momentaufnahme in Figur 12b zeigt, wie der Fisch 10 mit seiner Flanke 40 voraus in Richtung des Pfeils 46 bewegt wird. Bei dieser Bewegung handelt es sich zunächst um eine im Wesentlichen rotationsfreie Bewegung. Der Fisch 10 fällt der Schwerkraft folgend in Richtung des Pfeils 46.

Aufgrund der Seitenführungsflächen 18, 19 verschiedener Neigung und der damit verbundenen nicht vollflächigen Stützung der Flanke 40 erhält der Fisch 10 zusätzlich einen gewissen Drehimpuls um seine Längsachse, so dass dieser um seine Längsachse - wie in Figur 13b gezeigt - eine Schwenkbewegung in Richtung des Pfeils 47 ausführt, um schließlich in die in den Figuren 14a und 14b gezeigten gewünschten Bauch-Rückenausrichtung zu gelangen.

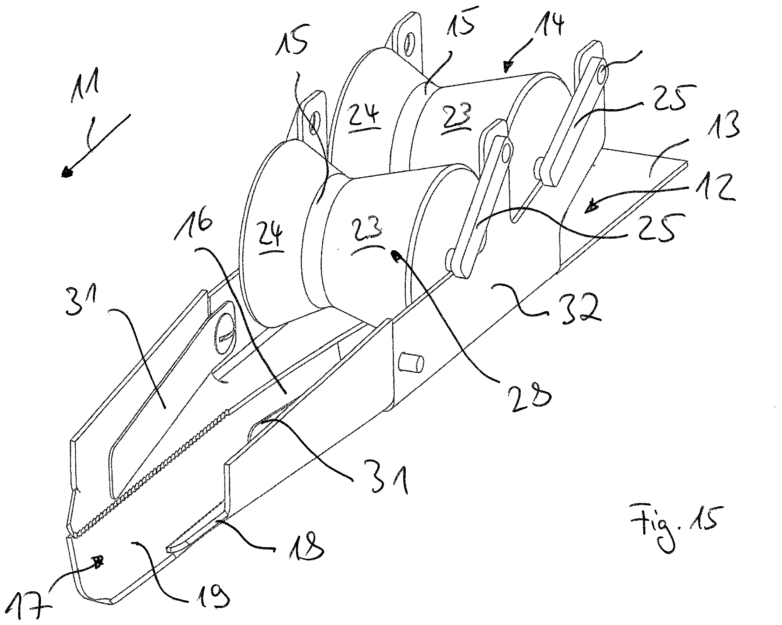

In Figur 15 ist die erfindungsgemäße Vorrichtung ergänzend in perspektivischer Ansicht mit Blickrichtung entgegen der Förderrichtung 11 gezeigt. Figur 16 zeigt eine zur Figur 15 alternative Ausführung. Anstelle der Hebelarme 25 sind die Führungsrollen 14, 28 in Langlöchern 41 gelagert. Vorzugsweise sind die Langlöcher 41, wie in der Zeichnung dargestellt, in der Förderrichtung 11 schräg geneigt ausgebildet. Dies wirkt sich insbesondere im Zusammenhang mit der genannten Rüttelförderung positiv auf die Durchsatzrate aus, da bei der Rüttelförderung die gesamte Vorrichtung in eine Hin- und Herbewegung in Förderrichtung 11 versetzt wird. Aufgrund ihrer Massenträgheit bewegen sich die Führungsrollen 14, 28 über - in der Zeichnung nicht gezeigte - Achsen, die in den Langlöchern 41 gelagert sind, auf und ab und beschleunigen die Fische 10 zusätzlich beim Durchgang durch die Überführungsausnehmung 16.

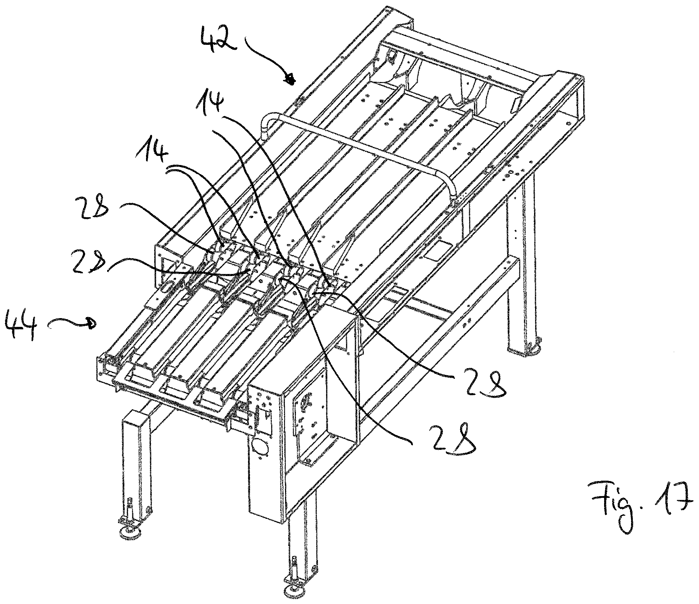

Weiter bevorzugt sind mehrere der erfindungsgemäßen Vorrichtungen parallel angeordnet. Figur 17 zeigt beispielhaft eine perspektivische Ansicht von vier parallel angeordneten erfindungsgemäßen Vorrichtungen mit vorgeschalteter Zuführeinheit 42. Die Zuführeinheit richtet die Fische 10 vor aus und fördert diese mit dem Kopf 37 voraus an die jeweiligen Zuführkanäle 12.

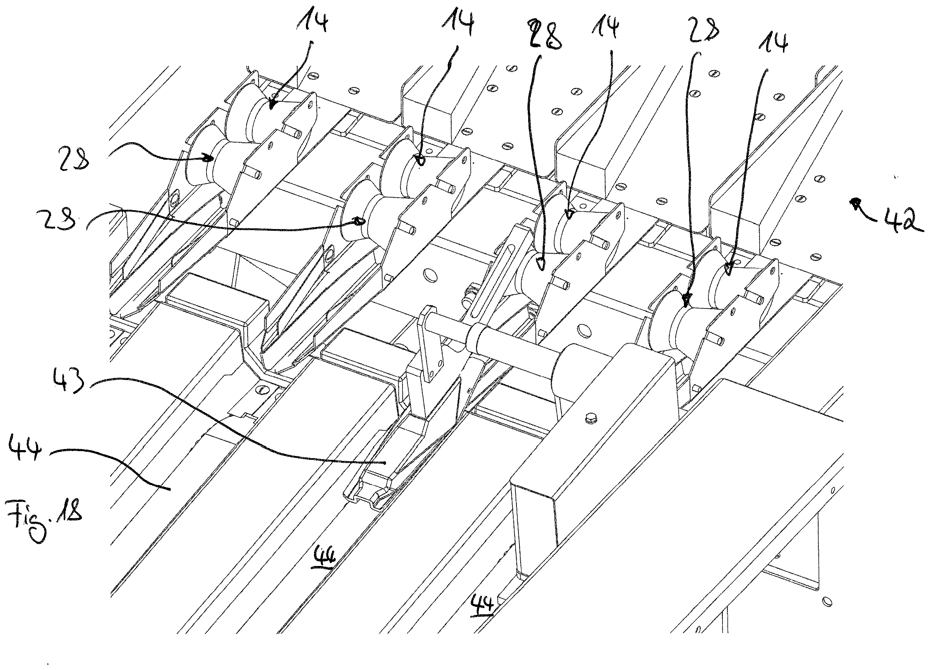

Figur 18 zeigt einen vergrößerte Detaildarstellung eines Teilausschnitts der Figur 17. In der Figur 18 sind zusätzlich Eintaktelemente 43 dargestellt, die die Fische 10, die den Leitkanal 17 verlassen, zu vorgegebenen Taktzeiten gesteuert an die weiteren Förderer 44 übergeben.

## Patentansprüche

1. Vorrichtung zur Bauch-Rückenlagen-Ausrichtung von Fischen (10) umfassend
eine zur Kopfvoraus-Förderung von Fischen (10) in Seitenlage eingerichtete erste Fördereinrichtung mit einem zum Führen der Fische in Förderrichtung (11) eingerichteten Zuführkanal (12), der einen eine erste Förderebene bildenden Kanalboden (13) aufweist,
mindestens eine von dem Kanalboden (13) beabstandet angeordnete und zur Querpositionierung der Fische (10) in dem Zuführkanal (12) eingerichtete Führungsrolle (14, 28), die sich über die Breite des Zuführkanals (12) erstreckt und mindestens einen Abschnitt (15) mit reduziertem Querschnittsdurchmesser aufweist, wobei
der Kanalboden (13) kanalmittig eine sich in Förderrichtung (11) weitende Überführungsausnehmung (16) umfasst, die zum Überführen der Fische (10) durch Schwerkrafteinwirkung an einen unterhalb der ersten Förderebene angeordneten Leitkanal (17) unter Ausrichtung in eine vorgegebene Bauch-Rückenlage ausgebildet ist,
wobei der Leitkanal (17) gegenüber der ersten Förderebene jeweils geneigt angeordnete Seitenführungsflächen (18, 19) umfasst, und
eine eine zweite Förderebene bildende und zur Förderung der Fische (10) in Seitenlage eingerichtete zweite Fördereinrichtung, die zur Übernahme der Fische (10) am Leitkanalende, dem Leitkanal (17) nachgeordnet ist.

2. Vorrichtung nach Anspruch 1, **dadurch gekennzeichnet, dass** der Abschnitt (15) mit reduziertem Querschnittsdurchmesser der Führungsrolle (14, 28) bezüglich der Zuführkanalmitte außermittig angeordnet ist.

3. Vorrichtung nach einem der Ansprüche 1 oder 2, **dadurch gekennzeichnet, dass** der Querschnittsdurchmesser der Führungsrolle (14, 28) ausgehend von dem Abschnitt (15) mit reduziertem Querschnittsdurchmesser jeweils hin zu den Außenabschnitten (21) der Führungsrolle (14, 28) zunehmend eingerichtet ist.

4. Vorrichtung nach Anspruch 3, **dadurch gekennzeichnet, dass** der Abschnitt (15) mit reduziertem Querschnittsdurchmesser zusammen mit den Außenabschnitten (21) eine konkave Außenkontur (22) der Führungsrolle (14, 28) bildet.

5. Vorrichtung nach einem der Ansprüche 3 oder 4, **dadurch gekennzeichnet, dass** die Führungsrolle (14, 28) im Bereich der Außenabschnitte (21) jeweils zumindest im Wesentlichen kegelstumpfförmig ausgebildet ist.

6. Vorrichtung nach einem der Ansprüche 4 oder 5 **dadurch gekennzeichnet, dass** die Außenkontur (22) absatzfrei ausgebildet ist.

7. Vorrichtung nach einem der Ansprüche 1 bis 6, **dadurch gekennzeichnet, dass** die Führungsrolle (14, 28) ausweichlich gelagert angeordnet ist.

8. Vorrichtung nach einem der Ansprüche 1 bis 7, **dadurch gekennzeichnet, dass** mindestens eine der Führungsrollen (14, 28) in Förderrichtung (11) vor der Überführungsausnehmung (16) angeordnet ist.

9. Vorrichtung nach einem der Ansprüche 1 bis 8, **dadurch gekennzeichnet, dass** mindestens eine der Führungsrollen (14, 28) in einem Eingangsbereich (29) der Überführungsausnehmung (16) angeordnet ist, innerhalb dessen die Breite der Überführungsausnehmung (16) geringer als die Endweite der Überführungsausnehmung ist (16).

10. Vorrichtung nach einem der Ansprüche 1 bis 9, **dadurch gekennzeichnet, dass** die Neigungen der Seitenführungsflächen (18, 19) des Leitkanals (17) jeweils unterschiedlich sind.

11. Vorrichtung nach einem der Ansprüche 1 bis 10, **dadurch gekennzeichnet, dass** der Leitkanal (17) im Querschnitt zumindest im Wesentlichen dreiecksförmig ist.

12. Vorrichtung nach einem der Ansprüche 1 bis 11, **dadurch gekennzeichnet, dass** die Seitenführungsflächen (18,19) des Leitkanals derart geneigt angeordnet sind, dass diese einen Leitkanalboden (30) bilden, der zumindest im Wesentlichen fluchtend zum Abschnitt (15) der Führungsrolle (14, 28) mit reduziertem Querschnittsdurchmesser ausgerichtet ist.

13. Vorrichtung nach einem der Ansprüche 1 bis 12, **dadurch gekennzeichnet, dass** in dem Zuführkanal (12) jeweils seitlich Abweiserelemente (31) angeordnet sind, die sich jeweils ausgehend von den Seitenwänden (32) des Zuführkanals in Richtung der Überführungsausnehmung (16) erstrecken.

14. Vorrichtung nach einem der Ansprüche 1 bis 13, **dadurch gekennzeichnet, dass** der Kanalboden (13) des Zuführkanals (12) rau ausgebildet ist und die erste Fördereinrichtung als Rüttelförderer ausgebildet ist.

15. Verfahren zur Bauch-Rückenlagen-Ausrichtung von Fischen (10) umfassend die Schritte:
Kopfvoraus-Fördern von Fischen (10) in Seitenlage mittels einer ersten Fördereinrichtung und Zuführen der Fische (10) in Förderrichtung (11) mittels eines Zuführkanals (12), der einen eine erste Förderebene bildenden Kanalboden (13) aufweist, wobei der Kanalboden (13) kanalmittig eine sich in Förderrichtung (11) weitende Überführungsausnehmung (16) umfasst,
Querpositionieren der Fische (10) in dem Zuführkanal (12) mittels mindestens einer von dem Kanalboden (13) beabstandet angeordneten Führungsrolle (14, 28), die sich über die Breite des Zuführkanals (12) erstreckt und mindestens einen Abschnitt (15) mit reduziertem Querschnittsdurchmesser aufweist,
Überführen der Fische (10) durch Schwerkrafteinwirkung an einen unterhalb der ersten Förderebene angeordneten Leitkanal (17) unter Ausrichtung in eine vorgegebene Bauch-Rückenlage, wobei der Leitkanal (17) gegenüber der ersten Förderebene jeweils geneigt angeordnete Seitenführungsflächen (18, 19) umfasst, und
Übernehmen der Fische (10) am Leitkanalende mittels einer eine zweite Förderebene bildenden zweiten Fördereinrichtung und Fördern der Fische (10) in Seitenlage mittels der zweiten Fördereinrichtung.

16. Verfahren nach Anspruch 15, **dadurch gekennzeichnet, dass** das Querpositionieren der Fische (10) mittels der Führungsrolle (14, 28) dadurch erfolgt, dass die Führungsrolle (14, 28) einen Abschnitt (15) mit reduziertem Querschnittsdurchmesser aufweist, der bezüglich der Zuführkanalmitte außermittig angeordnet ist.

17. Verfahren nach einem der Ansprüche 15 oder 16, **dadurch gekennzeichnet, dass** das Querpositionieren der Fische (10) abhängig von der Bauch-Rückenlage der Fische (10) mittels der Führungsrolle (14, 28) erfolgt, deren Querschnittsdurchmesser ausgehend von dem Abschnitt (15) mit reduziertem Querschnittsdurchmesser hin zu Außenabschnitten (21) der Führungsrolle (14, 28) zunimmt.

18. Verfahren nach Anspruch 17, **dadurch gekennzeichnet, dass** das Querpositionieren mittels der Führungsrolle (14, 28) durch eine konkave Außenkontur (22) bewirkt wird, die der Abschnitt (15) mit reduziertem Querschnittsdurchmesser zusammen mit den Außenabschnitten (21) bildet.

19. Verfahren nach einem der Ansprüche 15 bis 18, **dadurch gekennzeichnet, dass** beim Querpositionieren der Fische (10) die Führungsrolle (14, 28) gegen Rückstellkraft ausweicht.

20. Verfahren nach einem der Ansprüche 15 bis 19, **dadurch gekennzeichnet**, die Fische (10) zunächst mittels der Führungsrolle (14, 28) quer zu der Förderrichtung (11) in dem Zuführkanal (12) ausgerichtet werden und anschließend die Überführungsausnehmung (16) passieren.

21. Verfahren nach einem der Ansprüche 15 bis 20, **dadurch gekennzeichnet, dass** die Fische (10) mittels der ersten Fördereinrichtung durch Rütteln gefördert werden.

## Claims

1. An apparatus for ventral/dorsal alignment of fish (10) comprising
a first conveying device configured for conveying of fish (10) head-first on their side with a feed-in channel (12) configured for guiding the fish in the conveying direction (11), said feed-in channel having a channel floor (13) forming a first conveying plane,
at least one guide roller (14, 28) arranged at a distance from the channel floor (13) and configured for transversely positioning the fish (10) in the feed-in channel (12), said guide roller extending across the width of the feed-in channel (12) and having at least one section (15) with reduced cross-sectional diameter, wherein
the channel floor (13) in the centre of the channel comprises a transfer recess (16), widening in the conveying direction (11), which is designed to transfer the fish (10) by the effect of gravity to a guiding channel (17) arranged below the first conveying plane by aligning in a predetermined ventral/dorsal position,
wherein the guiding channel (17) comprises lateral guide surfaces (18, 19) each arranged inclined with respect to the first conveying plane, and
a second conveying device forming a second conveying plane and configured to convey the fish (10) on their side, said second conveying device being arranged downstream of the guiding channel (17) for taking over the fish (10) at the end of said guiding channel.

2. The apparatus according to claim 1, **characterised in that** the section (15) with reduced cross-sectional diameter of the guide roller (14, 28) is arranged eccentrically with respect to the centre of the feed-in channel.

3. The apparatus according to one of claims 1 or 2, **characterised in that** the cross-sectional diameter of the guide roller (14, 28), starting from the section (15) with reduced cross-sectional diameter, is configured to increase in each case toward the outer sections (21) of the guide roller (14, 28).

4. The apparatus according to claim 3, **characterised in that** the section (15) with reduced cross-sectional diameter together with the outer sections (21) forms a concave outer contour (22) of the guide roller (14, 28).

5. The apparatus according to one of claims 3 or 4, **characterised in that**, in the region of the outer sections (21), the guide roller (14, 28) is shaped at least substantially as a truncated cone in each case.

6. The apparatus according to one of claims 4 or 5, **characterised in that** the outer contour (22) is configured step-free.

7. The apparatus according to any one of claims 1 to 6, **characterised in that** the guide roller (14, 28) is arranged so as to be yieldingly mounted.

8. The apparatus according to any one of claims 1 to 7, **characterised in that** at least one of the guide rollers (14, 28) is arranged upstream of the transfer recess (16) in the conveying direction (11).

9. The apparatus according to any one of claims 1 to 8, **characterised in that** at least one of the guide rollers (14, 28) is arranged in an entry region (29) of the transfer recess (16), within which the width of the transfer recess (16) is smaller than the end width of the transfer recess (16).

10. The apparatus according to any one of claims 1 to 9, **characterised in that** the inclinations of the lateral guide surfaces (18, 19) of the guiding channel (17) are each different.

11. The apparatus according to any one of claims 1 to 10, **characterised in that** the guiding channel (17) is at least substantially triangular in cross-section.

12. The apparatus according to any one of claims 1 to 11, **characterised in that** the lateral guide surfaces (18, 19) of the guiding channel are arranged inclined, in such a manner that they form a guiding channel floor (30) which is aligned at least substantially flush with section (15) of the guide roller (14, 28) with reduced cross-sectional diameter.

13. The apparatus according to any one of claims 1 to 12, **characterised in that** deflector elements (31) are arranged laterally in each case in the feed-in channel (12), said deflector elements extending in each case, starting from the side walls (32) of the feed-in channel, in the direction of the transfer recess (16).

14. The apparatus according to any one of claims 1 to 13, **characterised in that** the channel floor (13) of the feed-in channel (12) is designed to be rough and the first conveying device is designed as a vibrating conveyor.

15. A method for ventral/dorsal alignment of fish (10) comprising the steps:
conveying of fish (10) head-first on their side by means of a first conveying device and guiding the fish (10) in the conveying direction (11) by means of a feed-in channel (12), which has a first channel floor (13) forming a first conveying plane, wherein the channel floor (13) in the centre of the channel comprises a transfer recess (16), widening in the conveying direction (11),
transversely positioning the fish (10) in the feed-in channel (12) by means of at least one guide roller (14, 28) arranged at a distance from the channel floor (13), said guide roller extending across the width of the feed-in channel (12) and having at least one section (15) with reduced cross-sectional diameter,
transferring the fish (10) by the effect of gravity to a guiding channel (17) arranged below the first conveying plane by aligning in a predetermined ventral/dorsal position, wherein the guiding channel (17) comprises lateral guide surfaces (18, 19) each arranged inclined with respect to the first conveying plane, and
taking over the fish (10) at the end of the guiding channel by means of a second conveying device forming a second conveying plane and conveying the fish (10) on their side by means of the second conveying device.

16. The method according to claim 15, **characterised in that** transversely positioning the fish (10) by means of the guide roller (14, 28) takes place **in that** the guide roller (14, 28) has a section (15) with reduced cross-sectional diameter, said guide roller being arranged eccentrically with respect to the centre of the feed-in channel.

17. The method according to one of claims 15 or 16, **characterised in that** transversely positioning the fish (10) takes place by means of the guide roller (14, 28) depending on the ventral/dorsal position of the fish (10), the cross-sectional diameter of said guide roller, starting from the section (15) with reduced cross-sectional diameter, increasing towards outer sections (21) of the guide roller (14, 28).

18. The method according to claim 17, **characterised in that** transversely positioning by means of the guide roller (14, 28) is brought about by a concave outer contour (22) which the section (15) with reduced cross-sectional diameter forms together with the outer sections (21).

19. The method according to any one of claims 15 to 18, **characterised in that** the guide roller (14, 28) yields against the restoring force when transversely positioning the fish (10).

20. The method according to any one of claims 15 to 19, **characterised in that** the fish (10) are first aligned transversely to the conveying direction (11) in the feed-in channel (12) by means of the guide roller (14, 28) and subsequently pass through the transfer recess (16).

21. The method according to any one of claims 15 to 20, **characterised in that** the fish (10) are conveyed by means of the conveying device by vibration.

## Revendications

1. Appareil pour une orientation en position ventrale/dorsale de poissons (10) comprenant
un premier dispositif de convoyage adapté pour convoyer des poissons (10) en position latérale tête la première avec un canal d'alimentation (12) adapté pour guider les poissons dans la direction de convoyage (11), ledit canal d'alimentation présentant un fond de canal (13) formant un premier plan de convoyage,
au moins un rouleau de guidage (14, 28) agencé à distance du fond de canal (13) et adapté pour positionner les poissons (10) de manière transversale dans le canal d'alimentation (12), ledit rouleau de guidage s'étendant sur la largeur du canal d'alimentation (12) et présentant au moins un tronçon (15) avec un diamètre de section transversale réduit, dans lequel
le fond de canal (13) comprend au milieu du canal un évidement de transfert (16), s'élargissant dans la direction de convoyage (11), qui est configuré pour transférer les poissons (10), sous l'effet de la gravité, à un canal de direction (17) agencé en dessous du premier plan de convoyage, avec une orientation dans une position ventrale/dorsale prédéfinie,
dans lequel le canal de direction (17) comprend des surfaces de guidage latérales (18, 19) agencées chacune de manière inclinée vis-à-vis du premier plan de convoyage, et
un second dispositif de convoyage formant un second plan de convoyage et adapté pour convoyer les poissons (10) en position latérale, ledit second dispositif de convoyage étant agencé en aval du canal de direction (17) pour récupérer les poissons (10) à l'extrémité du canal de direction.

2. Appareil selon la revendication 1, **caractérisé en ce que** le tronçon (15), avec un diamètre de section transversale réduit, du rouleau de guidage (14, 28) est agencé de manière excentrée par rapport au milieu du canal d'alimentation.

3. Appareil selon l'une quelconque des revendications 1 ou 2, **caractérisé en ce que** le diamètre de section transversale du rouleau de guidage (14, 28) est adapté pour augmenter depuis le tronçon (15) avec le diamètre de section transversale réduit jusqu'aux tronçons extérieurs (21) respectifs du rouleau de guidage (14, 28).

4. Appareil selon la revendication 3, **caractérisé en ce que** le tronçon (15) avec le diamètre de section transversale réduit forme conjointement avec les tronçons extérieurs (21) un contour extérieur concave (22) du rouleau de guidage (14, 28).

5. Appareil selon l'une quelconque des revendications 3 ou 4, **caractérisé en ce que** le rouleau de guidage (14, 28) est configuré, dans la zone des tronçons extérieurs (21), dans chaque cas au moins sensiblement de manière tronconique.

6. Appareil selon l'une quelconque des revendications 4 ou 5, **caractérisé en ce que** le contour extérieur (22) est configuré sans palier.

7. Appareil selon l'une quelconque des revendications 1 à 6, **caractérisé en ce que** le rouleau de guidage (14, 28) est agencé de manière à être monté pour pouvoir être dévié.

8. Appareil selon l'une quelconque des revendications 1 à 7, **caractérisé en ce qu'**au moins un des rouleaux de guidage (14, 28) est agencé avant l'évidement de transfert (16) dans la direction de convoyage (11).

9. Appareil selon l'une quelconque des revendications 1 à 8, **caractérisé en ce qu'**au moins un des rouleaux de guidage (14, 28) est agencé dans une zone d'entrée (29) de l'évidement de transfert (16) à l'intérieur de laquelle la largeur de l'évidement de transfert (16) est plus petite que la largeur d'extrémité de l'évidement de transfert (16).

10. Appareil selon l'une quelconque des revendications 1 à 9, **caractérisé en ce que** les inclinaisons des surfaces de guidage latérales (18, 19) du canal de direction (17) sont chacune différentes.

11. Appareil selon l'une quelconque des revendications 1 à 10, **caractérisé en ce que** le canal de direction (17) dans la section transversale est au moins sensiblement triangulaire.

12. Appareil selon l'une quelconque des revendications 1 à 11, **caractérisé en ce que** les surfaces de guidage latérales (18, 19) du canal de direction sont agencées d'une manière inclinée telle qu'elles forment un fond de canal de direction (30) qui est adapté de manière à être au moins sensiblement aligné avec le tronçon (15) du rouleau de guidage (14, 28) avec un diamètre de section transversale réduit.

13. Appareil selon l'une quelconque des revendications 1 à 12, **caractérisé en ce que**, dans le canal d'alimentation (12), des éléments déflecteurs (31) sont agencés de chaque côté, lesdits éléments déflecteurs s'étendant chacun depuis les parois latérales (32) du canal d'alimentation en direction de l'évidement de transfert (16).

14. Appareil selon l'une quelconque des revendications 1 à 13, **caractérisé en ce que** le fond de canal (13) du canal d'alimentation (12) est configuré pour être rugueux et **en ce que** le premier dispositif de convoyage est configuré pour être un convoyeur à vibrations.

15. Procédé pour une orientation en position ventrale/dorsale de poissons (10) comprenant les étapes consistant à :
convoyer des poissons (10) en position latérale tête la première via un premier dispositif de convoyage et alimenter les poissons (10) via un canal d'alimentation (12) dans la direction de convoyage (11), ledit canal d'alimentation présentant un fond de canal (13) formant un premier plan de convoyage, dans lequel le fond de canal (13) comprend au milieu du canal un évidement de transfert (16) s'élargissant dans la direction de convoyage (11),
positionner les poissons (10) de manière transversale dans le canal d'alimentation (12) via au moins un rouleau de guidage (14, 28) agencé à distance du fond de canal (13), ledit rouleau de guidage s'étendant sur la largeur du canal d'alimentation (12) et présentant au moins un tronçon (15) avec un diamètre de section transversale réduit,
transférer les poissons (10), sous l'effet de la gravité, à un canal de direction (17) agencé en dessous du premier plan de convoyage, avec une orientation dans une position ventrale/dorsale prédéfinie, dans lequel le canal de direction (17) comprend des surfaces de guidage latérales (18, 19) agencées chacune de manière inclinée vis-à-vis du premier plan de convoyage, et
récupérer les poissons (10) à l'extrémité du canal de direction via un second dispositif de convoyage formant un second plan de convoyage et convoyer les poissons (10) en position latérale via le second dispositif de convoyage.

16. Procédé selon la revendication 15, **caractérisé en ce que** l'étape consistant à positionner les poissons (10) de manière transversale au moyen du rouleau de guidage (14, 28) est le résultat du fait que le rouleau de guidage (14, 28) présente un tronçon (15) avec un diamètre de section transversale réduit qui est agencé de manière excentrée par rapport au milieu du canal d'alimentation.

17. Procédé selon l'une quelconque des revendications 15 ou 16, **caractérisé en ce que** l'étape consistant à positionner les poissons (10) de manière transversale s'effectue, dépendamment de la position ventrale/dorsale des poissons (10), au moyen du rouleau de guidage (14, 28) dont le diamètre de section transversale augmente depuis le tronçon (15) avec le diamètre de section transversale réduit jusqu'aux tronçons extérieurs (21) du rouleau de guidage (14, 28).

18. Procédé selon la revendication 17, **caractérisé en ce que** l'étape de positionnement transversal au moyen du rouleau de guidage (14, 28) est exécutée par un contour extérieur concave (22) que le tronçon (15) avec le diamètre de section transversale réduit forme conjointement avec les tronçons extérieurs (21).

19. Procédé selon l'une quelconque des revendications 15 à 18, **caractérisé en ce que**, lors du positionnement transversal des poissons (10), le rouleau de guidage (14, 28) dévie à l'encontre de la force de rappel.

20. Procédé selon l'une quelconque des revendications 15 à 19, **caractérisé en ce que** les poissons (10) sont d'abord orientés dans le canal d'alimentation (12) transversalement à la direction de convoyage (11) au moyen du rouleau de guidage (14, 28) et ensuite passent l'évidement de transfert (16).

21. Procédé selon l'une quelconque des revendications 15 à 20, **caractérisé en ce que** les poissons (10) sont convoyés par vibrations via le premier dispositif de convoyage.
